# EUROPEAN PATENT SPECIFICATION

(11) **EP 1 687 137 B1**
(45) Date of publication and mention of the grant of the patent: **23.12.2009**
(21) Application number: 04800385.9
(22) Date of filing: 24.11.2004
(51) Int. Cl.: B32B 27/04, B32B 33/00, B44C 5/04

(54) **A PROCESS FOR THE MANUFACTURING OF A DECORATIVE SURFACE ELEMENTS WITH A SURFACE STRUCTURE**
VERFAHREN ZUR HERSTELLUNG VON ZIERFLÄCHENELEMENTEN MIT EINER OBERFLÄCHENSTRUKTUR
PROCEDE POUR FABRIQUER DES ELEMENTS A SURFACE DECORATIVE AU MOYEN D'UNE STRUCTURE DE SURFACE

(30) Priority: 25.11.2003 SE 0303147
(43) Date of publication of application: 09.08.2006
(73) Proprietor: Pergo (Europe) AB, 231 25 Trelleborg (SE)
(72) Inventor: SJÖBERG, Åke, S-227 31 Lund (SE)
(74) Representative: Müller-Gerbes Wagner Albiger Patentanwälte
(86) International application number: PCT/SE2004/001724
(87) International publication number: WO 2005/051655

(56) References cited:
- GB-A- 1 407 052
- GB-A- 2 088 280
- US-A- 3 698 978
- US-A- 4 156 038
- US-A- 5 425 986
- DATABASE WPI Week 199328, Derwent Publications Ltd., London, GB; Class A32, AN 1993-223832, XP002985210 & JP 5 147 051 A (CHIYODA GRAVURE INSATSUSHA KK) 15 June 1993

## Description

### BACKGROUND OF THE INVENTION

### 1. Field of the invention

The present invention relates to a process for the manufacture of decorative surface elements with a surface structure.

### 2. Description of related art

Products coated with simulated versions of materials such as wood and marble are frequent today. They are foremost used where a less expensive material is desired, but also where resistance towards abrasion, indentation and different chemicals and moisture is required. As an example of such products floors, floor beadings, table tops, work tops and wall panels can be mentioned.

As an example of an existing product can be mentioned the thermosetting laminate which mostly consists of a base with a decor sheet placed closest to the surface. The decor sheet can be provided with a desired decor or pattern. It is also common to arrange a wear layer on top of the decor sheet in order to protect it from wear. The decorative surface is most often provided with a surface structure during the lamination in order to increase the decorative effect. This is achieved by utilising a press belt, a press foil or a press plate, provided with structured surface, which is pressed towards the surface during the lamination procedure.

### SUMMARY OF THE INVENTION

According to the present invention it has been made possible to manufacture decorative surface elements where a different type of surface structure is achieved.

The process can be used when manufacturing surface elements like floor boards, wall panels and ceiling panels. Accordingly, the invention relates to a process for the manufacturing of a decorative surface element. The element comprises a core material consisting of a particle board or a fibre board, a decorative surface layer and a protective upper wear layer. At least one of said decorative surface layer and said wear layer comprises a cellulose sheet and a thermosetting resin. The invention is characterised in that the process comprises the following steps:
a) the upper surface of the core material is provided with a surface structure;
b) the decorative surface layer is then applied on top of the surface structured core;
c) the protective wear layer is then applied on the decorative surface layer; and
d) the core material, the decorative layer and the wear layer are then pressed under increased pressure and temperature in a laminate press with a press cushion being arranged on top of the wear layer so that the resin cures and the different layers are bonded to one another.

According to an alternative embodiment of the invention, a) the upper surface of the core material is provided with a surface structure, and b) the decorative surface layer is then applied on top of the surface structured core. This surface layer may be an opaque or translucent lacquer, a printing ink or a decorated sheet. The lacquer may be applied by means of roller coating, curtain coating, transfer coating, air brushing, brushing or combinations thereof. The lacquer may be applied in several layers where at least one layer partially covers the surface in order to achieve a decorative pattern. The different lacquers then differs in colour. The application of the decorative pattern may be a guided operation where for example an air brush is guided by a computer aided robot. The printing ink may be applied by means of ink jet printing, screen printing, transfer printing or a combination thereof. c) The protective wear layer is then applied on the decorative surface layer. This wear layer may be a UV curing, electron beam curing, heat curing or multiple component lacquer, or resin. The lacquer or resin may be applied by means of roller coating, curtain coating, transfer coating, air brushing, brushing or combinations thereof. The lacquer or resin may be applied in several layers and may also contain fibre for reinforcement and/or hard particles for abrasion resistance. The fibre may be for example cellulose fibre while the particles may be of aluminum oxide, silicon oxide or silicon carbide which particles have an average particle size in the range 1 µm - 150 µm. d) The lacquer and or resin is then cured and the different layers are bonded to one another.

According to one embodiment of the invention the surface structure of the core material is achieved by milling a desired surface into the upper surface of the core material.

According to another embodiment of the invention the surface structure of the core material is achieved by pressing a structured press plate or press roller on top of the upper surface of the core material.

According to yet another embodiment of the invention the surface structure of the core material is achieved by rolling the core material between at least one surface structured calendar roller and a counter-stay roller.

According to yet another embodiment of the invention the surface structure of the core material is achieved by partially wetting the upper surface of the core material with a solvent.

According to yet another embodiment of the invention the surface structure of the core is achieved by wetting the upper surface of the core material with a solvent whereupon a structured press plate or roller is pressed onto said upper surface.

The decorative surface layer suitably comprises a cellulose sheet impregnated with an amino resin. The amino resin is suitably selected from the group consisting of melamine formaldehyde resin, urea formaldehyde resin and mixtures thereof.

The wear layer suitably also comprises a cellulose sheet impregnated with an amino resin selected from the group consisting of melamine formaldehyde resin, urea formaldehyde resin and mixtures thereof. It is of course possible to use more than one such cellulose sheets in the wear layer for increased wear resistance.

The wear layer may further comprise hard particles selected from the group consisting of aluminium oxide, silicon oxide and silicon carbide having an average particle size in the range 50 nm - 150 µm in order to further increase the wear resistance. The scratch resistance may be increased by providing the uppermost surface of the wear layer is provided with hard particles selected from the group consisting of aluminium oxide, silicon oxide and silicon carbide having an average particle size in the range 50 nm - 30 µm.

It is advantageous to utilise a press cushion arranged on top of the wear layer during the pressing.

The surface structure will of course comprise different features and can be described as macro structure and micro structure. The macro structure is in the present invention comprised of the structure arranged on the core material. It will here be possible to simulate for example the recessed grout line between ceramic tiles as well as the rough irregular surface of the ceramic tile itself. It is also possible to simulate worn wood like when the softer parts of the wood becomes recessed while the resin rich parts of the wood withstand wear and therefore protrudes. The micro structure is used for simulating pores in wood, granular structure, sanding mark structure, milling mark structure, micro cracks and flat to gloss surfaces. It is accordingly suitable to utilise a press foil provided with a micro structure which is arranged on top of the wear layer during the pressing. The press cushion is suitably arranged between the press foil and the press during the pressing.

## Claims

1. A process for manufacturing a decorative laminate having a surface structure comprising a core material consisting of a particle board or a fibre board, a decorative surface layer and a protective wear layer, at least one of the decorative surface layer and the protective wear layer comprising a cellulose sheet and a thermosetting resin; the process comprising the steps of
a) providing an upper surface of the core material with a surface structure;
b) applying the decorative surface layer on top of the surface-structured core material;
c) applying the protective wear layer on the decorative surface layer; and
d) pressing the core material, decorative surface layer and protective wear layer under increased pressure and temperature in a laminate press with a press cushion being arranged on top of the wear layer to cure the thermosetting resin and bond the different layers to one another.

2. A process according to Claim 1, wherein the surface structure of the core material is obtained by machining a desired surface into the upper surface of the core material.

3. A process according to Claim 1, wherein the surface structure of the core material is obtained by pressing a structured press plate or press roller on top of the upper surface of the core material.

4. A process according to Claim 1, wherein the surface structure of the core material is obtained by partially wetting the upper surface of the core material with a solvent.

5. A process according to Claim 1, wherein the surface structure of the core is obtained by wetting the upper surface of the core material with a solvent whereupon a structured press plate or roller is pressed onto said upper surface.

6. A process according to Claim 1, wherein the surface structure of the core material is obtained by rolling the core material between at least one surface structured calendar roller and a counter-stay roller.

7. A process according to any preceding claim, wherein the decorative surface layer comprises a cellulose sheet impregnated with a melamine-formaldehyde resin and/or a urea-formaldehyde resin.

8. A process according to any preceding claim, wherein the wear layer comprises a cellulose sheet impregnated with a melamine-formaldehyde resin and/or a urea-formaldehyde resin.

9. A process according to Claim 8, wherein the wear layer further comprises hard particles selected from the group consisting of aluminium oxide, silicon oxide and silicon, carbide having an average particle size in the range 50 nm to 150 µm.

10. A process according to Claim 8 or Claim 9, wherein the uppermost surface of the wear layer comprises hard particles selected from the group consisting of aluminium oxide, silicon oxide and silicon carbide having an average particle size in the range 50 nm to 30 µm.

11. A process according to any preceding claim, wherein a press foil provided with a micro structure is arranged on the wear layer and the press cushion is arranged between the press foil and the press during the pressing step (d).

## Patentansprüche

1. Verfahren zur Herstellung eines Dekorlaminats mit einer Oberflächenstruktur, umfassend ein Kernmaterial, bestehend aus einer Trägerplatte oder einer Faserplatte, einer Dekorflächenschicht und einer schützenden Abriebschicht, wobei mindestens eine von Dekorflächenschicht und schützender Abriebschicht ein Zelluloseblatt und ein aushärtbares Harz umfasst und wobei das Verfahren die folgenden Schritte umfasst:
a) Versehen einer Oberseite des Kernmaterials mit einer Oberflächenstruktur;
b) Aufbringen der Dekorflächenschicht oben auf das oberflächenstrukturierte Kernmaterial;
c) Aufbringen der schützenden Abriebschicht auf die Dekorflächenschicht und
d) Pressen des Kernmaterials, der Dekorflächenschicht und der schützenden Abriebschicht unter erhöhtem Druck und Temperatur in einer Laminatpresse mit einem Presskissen, welches oben auf der Abriebschicht angeordnet ist, um das aushärtbare Harz auszuhärten und die unterschiedlichen Schichten miteinander zu verbinden.

2. Verfahren nach Anspruch 1, wobei die Oberflächenstruktur des Kernmaterials durch spanende Bearbeitung einer gewünschten Fläche in die Oberseite des Kernmaterials erreicht wird.

3. Verfahren nach Anspruch 1, wobei die Oberflächenstruktur des Kernmaterials durch Pressen einer strukturierten Pressplatte oder einer Presswalze oben auf die Oberseite des Kernmaterials erreicht wird.

4. Verfahren nach Anspruch 1, wobei die Oberflächenstruktur des Kernmaterials durch teilweises Benetzen der Oberseite des Kernmaterials mit einem Lösungsmittel erreicht wird.

5. Verfahren nach Anspruch 1, wobei die Oberflächenstruktur des Kernmaterials **dadurch** erreicht wird, dass die Oberseite des Kernmaterials mit einem Lösungsmittel benetzt wird, woraufhin eine strukturierte Pressplatte oder eine Presswalze auf besagte Oberseite gepresst wird.

6. Verfahren nach Anspruch 1, wobei die Oberflächenstruktur des Kernmaterials durch Walzen des Kernmaterials zwischen wenigstens einer oberflächenstrukturierten Kalenderwalze und einer Gegenwalze erreicht wird.

7. Verfahren nach einem der vorangehenden Ansprüche, wobei die Dekorflächenschicht ein Zelluloseblatt umfasst, welches mit einem Melamin-Formaldehyd-Harz und/oder einem Harnstoff-Formaldehyd-Harz imprägniert ist.

8. Verfahren nach einem der vorangehenden Ansprüche, wobei die Abriebschicht eine Zellulosebahn umfasst, welche mit einem Melamin-Formaldehyd-Harz und/oder einem Harnstoff-Formaldehyd-Harz imprägniert ist.

9. Verfahren nach Anspruch 8, wobei die Abriebschicht darüber hinaus harte Partikel, ausgewählt aus der Gruppe bestehend aus Aluminiumoxid, Siliziumoxid und Siliziumkarbid, mit einer mittleren Partikelgröße im Bereich von 50 nm bis 150 µm umfasst.

10. Verfahren nach Anspruch 8 oder 9, wobei die oberste Fläche der Abriebschicht harte Partikel, ausgewählt aus der Gruppe bestehend aus Aluminiumoxid, Siliziumoxid und Siliziumkarbid, mit einer mittleren Partikelgröße im Bereich von 50 nm bis 30 µm umfasst.

11. Verfahren nach einem der vorangehenden Ansprüche, wobei eine mit einer Mikrostruktur versehene Pressfolie auf der Abriebschicht angeordnet wird und das Presskissen während des Pressschrittes (d) zwischen der Pressfolie und der Presse angeordnet wird.

## Revendications

1. Procédé de fabrication d'un stratifié décoratif ayant une structure de surface comprenant un matériau de noyau constitué d'un panneau de particules ou d'un panneau de fibre, une couche de surface décorative et une couche d'usure protectrice, au moins une parmi la couche de surface décorative et la couche d'usure protectrice comprenant une feuille de cellulose et une résine thermodurcissable ; le procédé comprenant les étapes consistant à :
a) donner à une surface supérieure du matériau de noyau une structure de surface ;
b) appliquer la couche de surface décorative par dessus le matériau de noyau à structure de surface ;
c) appliquer la couche d'usure protectrice sur la couche de surface décorative ; et
d) compresser le matériau de noyau, la couche de surface décorative et la couche d'usure protectrice sous une pression et une température accrues dans une presse à stratifier, un coussin de presse étant agencé sur la couche d'usure afin de durcir la résine thermodurcissable et de coller l'une à l'autre les différentes couches.

2. Procédé selon la revendication 1, selon lequel la structure de surface du matériau de noyau est obtenue par usinage d'une surface souhaitée sous la forme de la surface supérieure du matériau de noyau.

3. Procédé selon la revendication 1, selon lequel la structure de surface du matériau de noyau est obtenue en appuyant une plaque de presse structurée ou un rouleau de presse structuré sur la surface supérieure du matériau de noyau.

4. Procédé selon la revendication 1, selon lequel la structure de surface du matériau de noyau est obtenue par mouillage partiel de la surface supérieure du matériau de noyau avec un solvant.

5. Procédé selon la revendication 1, selon lequel la structure de surface du noyau est obtenue par mouillage de la surface supérieure du matériau de noyau avec un solvant, après quoi une plaque de presse structurée ou un rouleau de presse structuré est appuyé(e) sur ladite surface supérieure.

6. Procédé selon la revendication 1, selon lequel la structure de surface du matériau de noyau est obtenue par laminage du matériau de noyau entre au moins un rouleau de calandre à surface structurée et un contrerouleau de maintien.

7. Procédé selon l'une quelconque des revendications précédentes, selon lequel la couche de surface décorative comprend une feuille de cellulose imprégnée d'une résine de mélamine-formaldéhyde et/ou une résine d'urée-formaldéhyde.

8. Procédé selon l'une quelconque des revendications précédentes, selon lequel la couche d'usure comprend une feuille de cellulose imprégnée d'une résine de mélamine-formaldéhyde et/ou une résine d'urée-formaldéhyde.

9. Procédé selon la revendication 8, selon lequel la couche d'usure comprend en outre des particules dures choisies dans le groupe constitué d'oxyde d'aluminium, d'oxyde de silicium et de carbure de silicium, ayant une dimension granulométrique moyenne de l'ordre de 50 nm à 150 nm.

10. Procédé selon la revendication 8 ou 9, selon lequel la surface la plus haute de la couche d'usure comprend des particules dures choisies dans le groupe constitué d'oxyde d'aluminium, d'oxyde de silicium et de carbure de silicium, ayant une dimension granulométrique moyenne de l'ordre de 50 nm à 30 µm.

11. Procédé selon l'une quelconque des revendications précédentes, selon lequel une feuille métallique de presse dotée d'une microstructure est agencée sur la couche d'usure et le coussin de presse est agencé entre la feuille métallique de presse et la presse pendant l'étape de pressage (d).
